(19) Europäisches Patentamt European Patent Office Office européen des brevets

(11) **EP 4 597 415 A1**

(12) **EUROPEAN PATENT APPLICATION**

(43) Date of publication:
06.08.2025 Bulletin 2025/32

(21) Application number: 24461521.7

(22) Date of filing: 31.01.2024

(51) International Patent Classification (IPC):
**G06T 5/20** (2006.01) **G06T 5/70** (2024.01)
**G06T 7/521** (2017.01)

(52) Cooperative Patent Classification (CPC):
**G06T 7/521; G06T 5/20; G06T 5/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Centrum Badan i Rozwoju Technologii dla Przemyslu S.A.**
**00-645 Warszawa (PL)**

(72) Inventors:
• **ROTTER, Pawel**
**31-003 Krakow (PL)**
• **KLEMIATO, Maciej**
**30-009 Krakow (PL)**
• **ROSOL, Maciej**
**32-300 Olkusz (PL)**
• **KNAPIK, Dawid**
**32-300 Osiek (PL)**
• **PUTYNKOWSKI, Grzegorz**
**Audley ST78EA (GB)**

(74) Representative: **Kancelaria Eupatent.pl Sp. z.o.o**
**Ul. Kilinskiego 185**
**90-348 Lodz (PL)**

(54) **A METHOD FOR COMPENSATING INTERFERENCE NOISE IN IMAGES CAPTURED WITH LASER PROFILOMETERS**

(57)  A computer-implemented method for compensating interference noise in an image (60) captured with a laser profilometer (10), the method comprising processing (S2) the captured image (60) using a specific noise compensation formula to obtain a processed image (70) with compensated interference noise.

Fig. 1

**Description**

TECHNICAL FIELD

This invention pertains to the field of quality management and surface measurement technologies. More specifically, it relates to the enhancement of images captured by laser profilometers through the compensation of interference noise.

BACKGROUND

Optical quality control systems that use profilometers are well-established for inspecting flat objects, such as sheet metal or furniture boards, conveyed through production lines. These systems typically incorporate multiple measurement devices, including profilometers and cameras, to inspect surfaces. The complexity of processing images from multiple devices necessitates the alignment of data across images, which can be a challenging and resource-intensive task.

To simplify the measurement system, it is possible to reduce the number of measuring devices, potentially to a single laser profilometer. However, a significant challenge arises when using a single profilometer due to the presence of undesired noise within the captured images, which can adversely affect the quality and reliability of the data obtained.

SUMMARY

The present invention aims to address the aforementioned challenges by providing a method for compensating for interference noise within images captured by laser profilometers. The objective is to enhance the quality of surface measurements, enabling the inspection of both geometric features and visual defects on surfaces using a single profilometer, thereby potentially eliminating the need for additional cameras.

One aspect of the invention is a method for compensating interference noise in an image captured with a laser profilometer. This involves processing the captured image using a specific noise compensation formula to obtain a processed image with compensated interference noise. This method enhances the quality of surface measurements by reducing the impact of interference noise on the images captured by the laser profilometer.

The invention is particularly suitable to laser profilometers with a high-resolution CMOS camera. This integration allows for the use of the profilometer's inherent imaging capabilities to capture high-quality images, which can be further improved by the noise compensation method, thus potentially eliminating the need for additional imaging equipment.

The invention is applicable to methods for analyzing the surface of an object. This includes acquiring an image of the object's surface with a laser profilometer, processing the captured image based on the noise compensation formula to obtain a processed image, and then subjecting the processed image to a surface analysis procedure. This method streamlines the inspection process by using a single device for both capturing and processing images, which simplifies the system and reduces the complexity of the quality control setup.

Using the proposed method, surface analysis procedure can be performed based solely on the processed image captured by the laser profilometer. This approach emphasizes the capability of the noise compensation method to produce images of sufficient quality to allow for comprehensive surface analysis without the need for additional data sources, thereby offering a technical advantage in terms of system simplification and cost efficiency.

BRIEF DESCRIPTION OF DRAWINGS

The invention is illustrated by means of example embodiments in a drawing, wherein:

Fig. 1 shows a schematic of laser profilometer operation.
Fig. 2 shows an example of interference noise in an image.
Fig. 3 shows a processed image with compensated noise.
Fig. 4 shows a flowchart of a noise compensation method.
Fig. 5 shows a test image.
Fig. 6 shows a profilometer-captured image of a test pattern.
Fig. 7 shows a processed test image with compensated noise.
Fig. 8 shows detected surface defects in the processed image.

DETAILED DESCRIPTION

The following detailed description presents the best currently contemplated modes of executing the invention.

The description is not intended to be limiting, but is provided merely to illustrate the general principles of the invention.

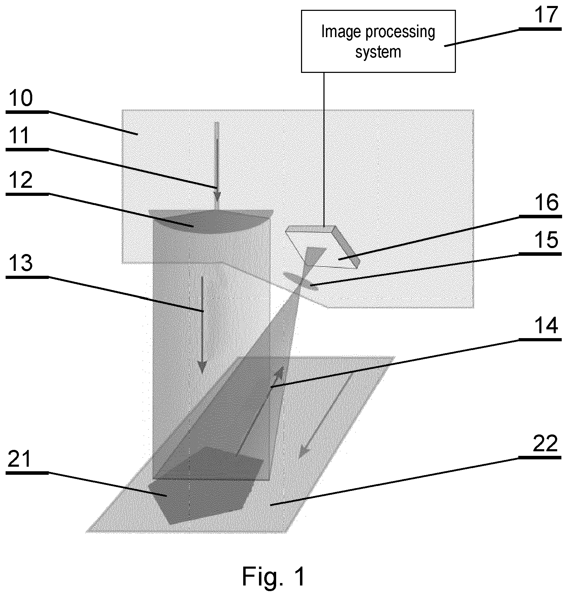

The present invention provides a method for compensating for interference noise in images captured by laser profilometers. These devices enable the non-contact acquisition of three-dimensional representations of moving surfaces. The laser profilometer operates on the principle of laser triangulation to determine the distance to a surface. As shown in Figure 1, the laser profilometer 10 emits a laser beam 11, which is shaped by a set of cylindrical lenses 12. The resulting shaped beam 13 strikes the surface of an object 21 under inspection. The reflected beam 14 is then collected through a receiving lens 15 and detected by a detector 16, such as a high-resolution CMOS camera, which forms part of the profilometer apparatus. The position of the reflected beam 14 on the detector 16 allows for the determination of the angle between the shaped beam 13 and the reflected beam 14, thereby enabling the calculation of the distance from the detector 16 to the surface of the object 21 at each illuminated point. As the object 21 is conveyed along a conveyor belt 22 in a direction orthogonal to the laser beam 13, the entire surface is systematically scanned, allowing for the computation of the three-dimensional coordinates of each point on the object's surface. The scanning process, utilizing one or more profilometers 10, facilitates the assessment of surface characteristics such as waviness or roughness and the generation of a three-dimensional model of the object.

In typical optical quality control systems, two-dimensional camera images are necessary to identify a variety of defects, despite the accurate geometric information provided by three-dimensional imaging. Consequently, systems equipped with 3D scanning capabilities also analyze 2D images of surface luminance, incorporating both 3D surface inspection for shape defect detection and 2D surface examination using traditional cameras. These functions are often performed on separate laboratory workstations, one with a profilometer and the other with a camera. However, given that the CMOS sensor is integrated into the profilometer, many profilometers possess the capability to perform simultaneous 3D scanning and capture an image of the moving surface.

The primary challenge in using the profilometer both as a 3D scanner and as a camera for grayscale image acquisition, thereby obviating the need for a separate camera station, is the inferior quality of the luminance images produced by the profilometer. This limitation predominantly arises from the characteristics of the laser light used in the profilometer, which forms a beam extending along the X-axis. Consequently, light waves at different x-positions, while sharing the same frequency, exhibit varying phases. This inhomogeneity in the electromagnetic waves results in interference, leading to irregular fluctuations in light intensity along the x-axis, a phenomenon known as interference noise.

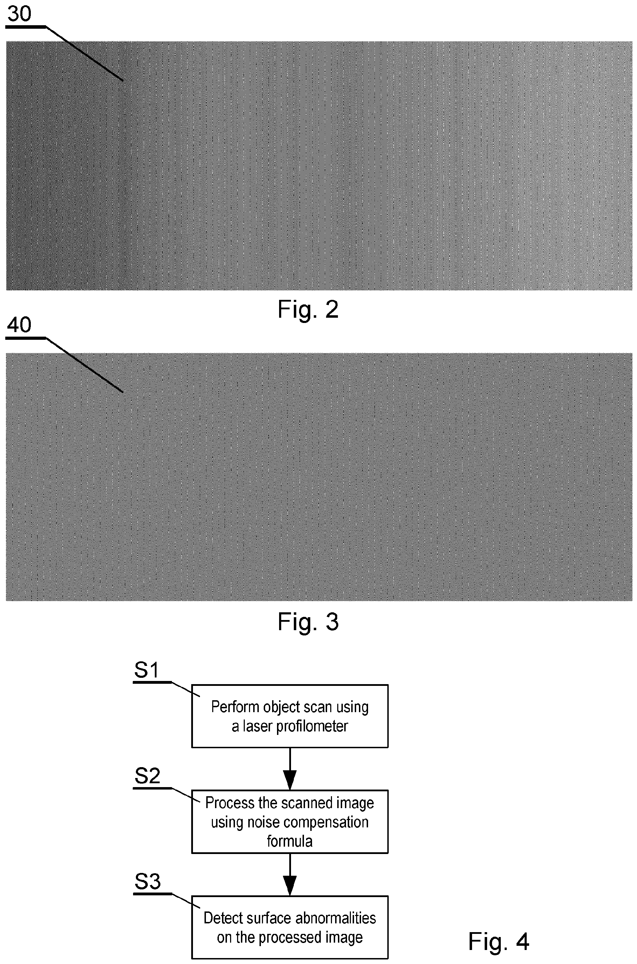

Interference noise manifests in luminance images 31 captured with profilometers as vertical stripes, as depicted in Fig. 2. The luminance image, akin to that produced by a line camera, is generated line by line. Thus, it resembles column fixed pattern noise (CFPN) observed in CMOS cameras, particularly TDI-CMOS. However, the columnar interference noise in profilometry images is significantly more pronounced than in CMOS cameras, and the position of the stripes is not fixed to the sensor but varies considerably depending on the distance to the object. Additionally, even when scanning a flat surface, the position of the stripes may fluctuate slightly from the top to the bottom of the image. Consequently, methods devised to mitigate columnar noise in CMOS camera images are not directly applicable to intensity images from profilometers.

Standard columnar noise, such as CFPN in CMOS cameras, can be compensated for by deducting from each pixel the average value of all pixels within the same column (or the median for enhanced noise robustness). While this approach yields satisfactory results for homogeneous surfaces with columnar noise, the interference stripes in images from profilometers often do not align perfectly vertically nor form straight segments, as the distance from the profilometer to the surface can vary due to surface features like waviness.

To address this, the present invention employs a noise compensation method wherein the median for a column is calculated locally, based on the following equation:

$$a(r,c) = a(r,c) - \underset{i=R1,\,..,\,R2}{\mathrm{median}}\, a(i,c) + \underset{i=1,\,..,\,R,\ j=1,\,..,\,C}{\mathrm{median}}\, a(i,j)$$

wherein:

R1 = max{1, r-ε}
R2 = min{R, r-ε}
R represents the vertical image dimension (in pixels)
C represents the horizontal image dimension (in pixels)
ε denotes a half of a window size
r and c represent the row and column indices, respectively

The window size corresponds the size of the neighborhood from which the median is calculated. When the method is used to analyze homogeneous surfaces (such as furniture boards), selecting a large window provides greater robustness to local variations. Surface defects with a size exceeding the value of ε can be filtered out along with the interference fringes, which would make them indetectable at a later stage. However, an excessively large value of ε causes that when the fringes slightly change their position depending on the y-coordinate (this phenomenon occurs in practice), the compensation is incorrect.

According to the noise compensation method, the median of the pixels in the same column within its ε-neighbourhood is subtracted from the pixel value. Additionally, to counteract the reduction in luminance resulting from the application of the first part of the method, the median of all pixels in the image is added to the entire image.

The original image 30 depicted in Fig. 2, when processed using the aforementioned method, yields the processed image 40 shown in Fig. 3. Fig. 3 illustrates the image from Fig. 2 after the pixel values have been processed by the noise compensation method.

The image processing can be performed in an image processing system 17 configured to receive images captured by the detector 16 of the profilometer 10. The image processing system 17 can be implemented by means of a dedicated software module operated by a computer system used to perform quality inspection on a production line where the quality of objects 21 is inspected.

Fig. 4 outlines the method and its application in detecting surface anomalies. Initially, in step S1, the object 21 is scanned using a standard laser profilometer 10, producing an image typically containing noise as illustrated in Fig. 2. Subsequently, the scanned image undergoes processing in step S2 employing the noise compensation method, resulting in an image with mitigated interference noise. This processed image can then be utilized for further analysis tasks, such as detecting surface anomalies in step S3, using established algorithms designed for images derived from multiple data sources, including profilometers and cameras.

Example of use

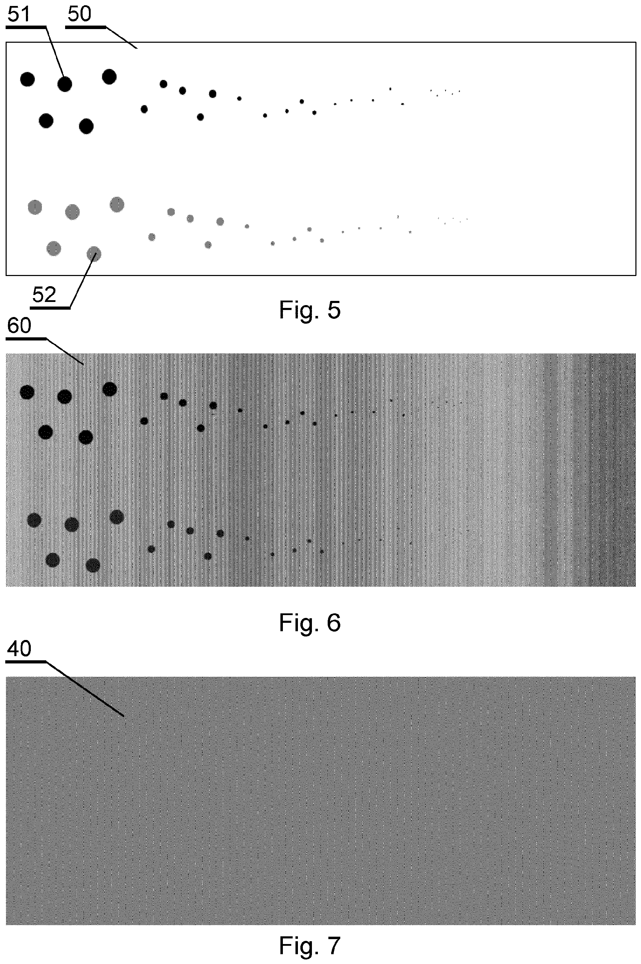

An example is provided to demonstrate the efficacy of the proposed interference noise compensation method in preserving image detail. A test image 50, as shown in Fig. 5, was printed and subsequently imaged using a Keyence LJ-X8400 laser profilometer. The captured image 60 is presented in Fig. 6. The test image 50 includes circles 51, 52 with diameters of 4, 2, 1, 0.5, and 0.2 mm, where the circles 51 in the upper half of the image exhibit 100% darkness and the circles 52 in the lower half display 50% darkness.

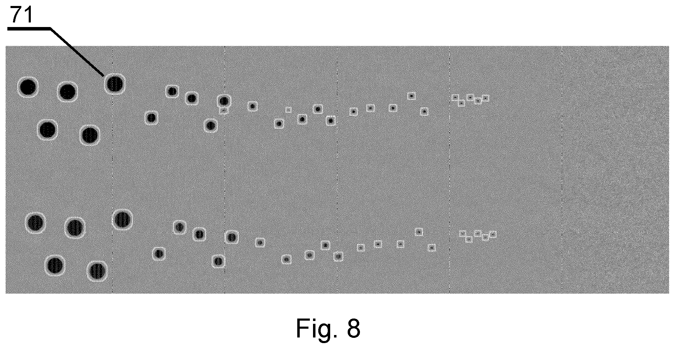

The captured image 60 had a size of $2352 \times 873$ pixels. The parameter ε (half of window size) was set to the value of 100. The captured image 60 was processed using the noise compensation method, resulting in the processed image 70 depicted in Fig. 7. The image 70 from Fig. 7 was then supplied as input to a visual detection system for surface defect identification, which detects imperfections as small luminance variations on the surface. A conventional algorithm based on morphological operations was employed, successfully identifying all defects and marking them as flaw indications 71, as shown in Fig. 8.

While the invention has been described with respect to a limited number of embodiments, it will be appreciated that many variations, modifications and other applications of the invention may be made. Therefore, the claimed invention as recited in the claims that follow is not limited to the embodiments described herein.

**Claims**

1.   A computer-implemented method for compensating interference noise in an image (60) captured with a laser profilometer (10), the method comprising processing (S2) the captured image (60) using a noise compensation formula:

$$a(r,c) = a(r,c) - \underset{i=R1, .., R2}{\mathrm{median}}\, a(i,c) + \underset{i=1, .., R,\ j=1, .., C}{\mathrm{median}}\, a(i,j)$$

wherein:

R1 = max{1, r-ε},
R2 = min{R, r-ε},
R represents the vertical image dimension in pixels,
C represents the horizontal image dimension in pixels,
ε denotes half of the window size, wherein the window size represents the size of neighborhood from which the median is calculated;
r and c represent the row and column indices, respectively,

to obtain a processed image (70) with compensated interference noise.

2. The method of claim 1, wherein the laser profilometer (10) comprises a high-resolution CMOS camera (16).

3. A method for analyzing the surface of an object (21), the method comprising:

   - acquiring (S1) an image (60) of the object surface by means of a laser profilometer (10);
   - processing (S2) the captured image (60) by the method of claim 1 or 2 to obtain a processed image (70);
   - subjecting (S3) the processed image (70) to a surface analysis procedure.

4. The method according to claim 3, wherein the surface analysis procedure is performed based solely on the processed image (70).

Image processing
system

17

10

11

12

13

16

15

14

22

21

Fig. 1

30

Fig. 2

40

Fig. 3

S1

Perform object scan using
a laser profilometer

S2

Process the scanned image
using noise compensation
formula

S3

Detect surface abnormalities
on the processed image

Fig. 4

Fig. 5

Fig. 6

Fig. 7

Fig. 8

Europäisches
Patentamt

European
Patent Office

Office européen
des brevets

# EUROPEAN SEARCH REPORT

**Application Number**

EP 24 46 1521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LUNZER JOHN B. ET AL: "Fully automatic destriping of Hyperion hyperspectral satellite imagery using local window statistics", ALGORITHMS AND TECHNOLOGIES FOR MULTISPECTRAL, HYPERSPECTRAL, AND ULTRASPECTRAL IMAGERY XIX, vol. 8743, 18 May 2013 (2013-05-18), page 87431R, XP093177836, DOI: 10.1117/12.2018860 * abstract * * Section 3; figure 3 * * Section 3.5 * | 1-4 | INV. G06T5/20 G06T5/70 G06T7/521 |
| A | JP 2010 239480 A (FUJIFILM CORP) 21 October 2010 (2010-10-21) * paragraph [0013] - paragraph [0017] * * paragraph [0032] - paragraph [0038] * | 1-4 | |
| A | US 2023/419449 A1 (MAACK HANNS-INGO [DE] ET AL) 28 December 2023 (2023-12-28) * paragraph [0011] * * paragraph [0043] * | 1-4 | **TECHNICAL FIELDS SEARCHED (IPC)** G06T |

The present search report has been drawn up for all claims

| Place of search | Date of completion of the search | Examiner |
|---|---|---|
| The Hague | 21 June 2024 | Boltz, Sylvain |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 46 1521

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2024

| Patent document cited in search report | Publication date | Patent family member(s) | Publication date |
|---|---|---|---|
| JP 2010239480 A | 21-10-2010 | JP 5010637 B2<br>JP 2010239480 A<br>US 2010246922 A1 | 29-08-2012<br>21-10-2010<br>30-09-2010 |
| US 2023419449 A1 | 28-12-2023 | CN 116601942 A<br>EP 4002834 A1<br>EP 4248642 A1<br>US 2023419449 A1<br>WO 2022106225 A1 | 15-08-2023<br>25-05-2022<br>27-09-2023<br>28-12-2023<br>27-05-2022 |

EPO FORM P0459

For more details about this annex : see Official Journal of the European Patent Office, No. 12/82